# EUROPEAN PATENT APPLICATION

(11) **EP 1 852 490 A1**
(43) Date of publication of application: **07.11.2007**
(21) Application number: 06113545.5
(22) Date of filing: 05.05.2006
(51) Int. Cl.: C10B 53/02, C10G 1/00, C10G 1/04, C10G 1/06

(54) **Pretreatment of particulate carbon-based energy carrier material**

(71) Applicant: BIOeCON International Holding N.V., Curaçao (AN)
(72) Inventor: O'CONNOR, Paul, 3871 KM, HOEVELAKEN (NL)
(74) Representative: Rasser, Jacobus Cornelis

(57) **Abstract**

Disclosed is a process for pretreating a particulate carbon-based energy carrier material. The pretreatment results in a sensitized energy carrier material that is susceptible to conversion to a liquid fuel under mild conditions.

## Description

### BACKGROUND OF THE INVENTION

### 1. Field of the Invention

The present invention relates to a process for pretreating a particulate carbon-based energy carrier material. The pretreatment results in a sensitized energy carrier material that is susceptible to conversion to a liquid fuel under mild conditions.

### 2. Description of the Related Art

As the supplies of readily accessible crude oil are dwindling, there is an increasing need for liquid fuels from other sources. Certain carbon-based energy carrier materials are abundantly available. Examples include coal, tar sand, shale oil, and biomass. Processes have been developed to convert these energy carrier materials to liquid fuels. Examples of such processes include pyrolysis and hydrothermal conversion. However, these processes require relatively severe conditions, which require expensive equipment and a high-energy input.

There is, therefore, a need for developing carbon-based energy carrier materials that are sensitized ('activated'), so as to be more susceptible to conversion to a liquid fuel under relatively mild conditions.

### BRIEF SUMMARY OF THE INVENTION

The present invention relates to a process for making a carbon-based energy carrier susceptible to conversion to a liquid fuel under mild conditions, said process comprising the steps of:
a) providing particles of the carbon-based energy carrier having an average particle size dₑ in the range of 5 mm to 100 micrometers;
b) providing catalyst particles having an average particle size d_{c} in the range of 1 micrometer to 10 nm.
c) mixing the carbon-based energy carrier particles with the catalyst particles to form a blend;
d) subjecting the blend to a temperature in the range of from 50 to 200 °C in the presence of an oxygen-poor atmosphere to form a sensitized energy carrier material.

Preferred carbon-based energy carrier materials include coal, tar sand, shale oil, and biomass.

Preferred catalyst materials include clay, zeolite, alumina, silica-alumina, hydrotalcite, cationic layered material, anionic clay, LDH, smectite clay, saponite, sepiolite, or Anderson Oxide.

### DESCRIPTION OF ILLUSTRATIVE EMBODIMENTS

The following is a description of certain embodiments of the invention, given by way of example only.

The present invention relates to a pretreatment of particulate carbon-based energy carrier materials so as to make these materials susceptible to a conversion to a liquid fuel under relatively mild conditions.

The carbon-based energy carrier materials for use in the process of the present invention are solid materials and materials that could be classified as liquids, but having a very high viscosity. In this document, the materials will be referred to as "solid". It will be understood that, as used herein, the term solid encompasses highly viscous liquids. In the case of tar sands, the "particles" comprise sand corns that are coated with tar. For the purpose of the present invention these coated sand corns are considered particles of a carbon-based energy carrier.

The materials can be formed into particles, which particles tend to retain their integrity at or near ambient conditions of temperature and pressure. Examples of such materials include coal, tar sand, shale oil, and biomass.

Processes exist for converting these materials to liquid fuels. Examples include hydrothermal treatment and pyrolysis. The existing processes require relatively severe conditions of temperature and pressure. In turn, these relatively severe conditions of temperature and pressure necessitate equipment able to resist these conditions. By its nature, this type of equipment is expensive. Also, these conditions require a relatively great input of energy. Moreover, the relatively severe conditions of temperature and pressure results in an uncontrolled conversion of the particulate energy carrier material to liquids comprising large amounts of lesser value compounds.

It is therefore desirable to make these carbon-based energy carrier materials more susceptible to conversion to liquid fuels, so that this conversion can be carried out under relatively mild conditions of temperature and pressure.

The present invention is a process for pretreating particulate carbon-based energy carrier materials. The process of the present invention makes the energy carrier material more susceptible to conversion to liquid fuel, so that this conversion may be carried out under relatively mild conditions of temperature and pressure. Accordingly, the equipment needed for the subsequent conversion can be relatively inexpensive. Moreover, that conversion to liquid fuel results in a mixture of liquid compounds of greater economic value than that produced by existing processes of this kind.

An important aspect of the process of the present invention is that particles of the carbon-based energy carrier material are covered with the very small particles of a catalytic material. Conceptually, the particles of the carbon-based energy carrier material are dusted with a coating of catalyst particles. Although both the energy carrier material and the catalytic material are solids, by providing catalyst particles that are much smaller than the particles of the energy carrier material it is possible to provide a very intimate contact between the energy carrier particles and the catalyst particles. As a result it is possible to catalytically convert at least the outer shell of the energy carrier particles, so as to make these particles more susceptible to conversion to liquid fuel components in a subsequent process.

As a first step, carbon-based energy carrier material is provided in the form of small particles. This may be by the grinding, milling, and the like. The most suitable method for making these small particles depends on the nature of the carbon-based energy carrier material. For example, coal may be milled in a ball mill or a hammer mill; other materials may be more conveniently treated in a grinder. The appropriate method may be selected by the skilled person based on general criteria of the feasibility, cost, and hardness of the material to be ground.

If the energy carrier is tar sand the particles comprise sand grains coated or partially coated with a heavy hydrocarbon mixture. In general these particles already have the appropriate size for the process of the present invention. In any event, it is generally not practical to reduce the size of these tar sand particles.

The particle size dₑ of the particulate carbon-based energy carrier material preferably is in the range of from 5 mm to 100 micrometers.

The catalyst material is provided in the form of particles having an average particle size d_{c} in the range of from 1000 nm to 10 nm. Particles of this size may be obtained by forming inorganic materials from a solution or a slurry, and controlling the conditions so as to favor the formation of particles within this size range. Processes of this kind are well-known, and are not part of the present invention. In an alternate process, inorganic materials may be formed into particles of the desired size by exfoliating or peptizing larger particles.

In a preferred embodiment, the ratio dₑ/d_{c} is in the range of 50,000 to 500. Particle size ratios within these ranges ensure is that the particles of the carbon-based energy carrier material may be coated with a dusting of particles of the catalytic material.

The particles of the carbon-based energy carrier material and the particles of the catalyst are mixed together. This mixing may be done by any suitable method known to the skilled person. The appropriate method will depend on the nature of the carbon-based energy carrier material. In general, methods used for reducing the particle size of the carbon-based energy carrier material tend to be also suitable for this mixing step.

Preferably, the energy carrier particles and cut his particles are makes in a weight ratio in the range of from 1000:1 to 10:1, preferably from 100:1 to 30:1. These weight ratios ensure that a sufficient number of catalyst particles are available to provide at least a partial coating of the energy carrier particles.

After the mixing step the blend that is obtained is subjected to a temperature in the range of from 50 to 400 degrees centigrade, preferably from 100 to 250 degrees centigrade. At temperatures above about 360 degrees centigrade care must be taken that no excessive coke formation takes place. Small particles of carbon-based energy carrier material tend to be highly combustible. Therefore, it is important that this temperature treatment be carried out in the presence of a atmosphere that is oxygen-poor. Preferably, this atmosphere is substantially oxygen free. The pressure preferably does not exceed 50 bar.

In a preferred embodiment the temperature treatment is carried out in the presence of a gas comprising steam. Steam may be provided from an external source. In many cases, the carbon-based energy carrier material contains significant amounts of water. In these cases, at least part of the steam will be provided by the carbon-based energy carrier material itself.

Preferred carbon-based energy carrier materials include coal, tar sand, shale oil, and biomass. In particular biomass is preferred as a carbon-based energy carrier material for use in the process of the present invention. The term biomass as used herein means any material of biological origin having a high enough energy content to be suitable as a source of liquid fuel. Specific examples include aquatic plants, agricultural waste, and animal waste, in particular manure. Specifically preferred are biomass materials of photosynthetic origin. Examples include aquatic plants such as algae; forestry waste such as wood chips and saw dust; agricultural plant waste such as bagasse, straw, corn cobs, and the like; so-called energy crops such as switch grass; and food crops such as corn and grains.

A wide variety of catalytic materials are suitable for use in the process of the present invention. The purpose of the process of the present invention is to make the carbon-based energy carrier material more susceptible to a subsequent mild conversion to liquid fuel. It is desirable to leave the catalyst particles in the sensitized energy carrier material as it goes from the pretreatment process to the subsequent conversion to liquid fuel. For this reason, preferred catalytic materials are those that also play a catalytic role in the subsequent conversion to liquid fuel. The catalytic material may be organic, for example metallo-organic compounds, or solid organic acids. Inorganic catalytic materials are preferred, as they are more readily separated from the liquid fuel obtained in the subsequent conversion step.

Many inorganic materials are suitable as catalytic materials for the process of the present invention. Examples include compounds of transition metals, in particular the salts and the oxides or hydroxides; refractory oxides such as alumina, zirconia, silica, silica-alumina, titania, and the like. Molecular sieves, in particular zeolites, are particularly suitable. Another class of suitable inorganic materials are layered inorganic materials, such as clays, cationic layered materials, anionic layered materials, LDHs, and the like. The catalytic properties of many of these materials may be modified. For example, transition metals may be incorporated into refractory oxides or layered inorganic materials. Molecular sieves may be ion-exchanged with materials having desirable catalytic properties.

A particularly preferred class of catalytic materials are the hydrotalcites. The hydrotalcites are a class of mixed oxides of a divalent metal and a trivalent metal having the structure of hydrotalcite *per se.* Hydrotalcite is a mixed oxide of magnesium and aluminum.

For the purpose of the present invention, the catalytic material must be provided in the form of particles having an average particle size in the range of from 10 to 1000 nm. Particles within this range may be prepared from larger particles using particle size reduction techniques such as ball milling, hammer milling, grinding, etc. However, it is difficult to prepare particles having a size at the low end of the range by particle size reduction techniques. It is therefore preferred to use physicochemical techniques for reducing the particle size of these materials, such as peptization or exfoliation. These techniques are well-known in the art and will be apparent to the skilled person.

After the blend of catalyst particles and energy carrier particles is formed, it is subjected to the temperature in the range of from 50 to 400 degrees centigrade in the presence of an oxygen-poor atmosphere, to form a sensitized energy carrier material. This sensitized material is more susceptible to conversion to a liquid fuel them the carbon-based energy carrier material from which it is derived.

The sensitized energy carrier material is subjected to a conversion to a liquid fuel under mild conditions. Preferably, the mild conditions comprise a temperature in the range of from 150 to 500 degrees centigrade, preferably from 200 to 350 degrees centigrade, and a pressure of from 1 to 50 bar, preferably from 1 to 20 bar.

The particular choice of conversion conditions depends on the catalyst material that is present in the sensitized energy carrier material, and the desired liquid fuel to be obtained from the energy carrier material. The mild conditions may comprise hydrothermal conversion conditions; or mild pyrolysis conditions.

In one preferred embodiment, the conversion is carried out in the presence of hydrogen, and the conversion comprises hydrogen treatment and/or hydroconversion.

In an alternate embodiment the mild conditions comprise mild catalytic cracking conditions.

It is possible to introduce a second catalyst, in addition to the catalytic material already present in the sensitized energy carrier material. The second catalyst may be the same as the one already present, or it may be different. For example, when operating under hydrotreatment conditions, its may be desirable to introduce a hydrotreatment catalyst of a type well-known from the refining industry. Likewise, when operating under mild catalytic cracking conditions it may be desirable to introduce a cracking catalyst as the second catalyst.

The resulting liquid fuel may be used as is, for example as a heating fuel. Alternatively, the liquid fuel may be upgraded to meet specifications for use in internal combustion engines. The liquid "fuel" may also be used as a source of specific chemical compounds, which may be used in the chemical industry, for example as monomers for the production of polymers.

In addition to a liquid fraction, generally a gaseous fraction is also produced. This fraction may be used as a fuel, or as a source of chemical components for the chemical industry.

The process of the present invention may be carried out at a dedicated processing facility, whereby the carbon-based energy carrier material is transported to the processing facility in the form it is produced.

On the other hand, it may be attractive to mix carbon-based energy carrier particles with catalyst particles *in situ,* that is, at the location where the energy carrier is produced or won. In a particularly preferred embodiment of the latter process the subsequent conversion to liquid and/or gaseous fuel is also carried out *in situ,* as this conversion results in a material that is more economically transported than the energy carrier material from which it is derived. For example, tar sand is difficult to handle and transported, but a liquid fuel derived from tar sand by the process of the present invention is readily transported through a pipeline or in tank cars.

A particularly preferred embodiment of the present invention relates to the conversion of heavy crude oil inside the well. Heavy crude oils are not readily pumped from a well, and various techniques have been developed to reduce the viscosity of these heavy crudes to make them pumpable. In this specific embodiment of the present invention, a slurry of catalyst particles of the desired particle size is pumped into a well containing a heavy crude. The catalyst particles are mixed with the heavy crude within the well by a suitable technique, such as steam injection. The conditions within an oil well are suitable for converting the heavy crude to a sensitized energy carrier material, and for an at least partial conversion of the heavy crude to a liquid fuel. As a result of this conversion a material with much reduced viscosity is obtained, which is readily pumpable from the well.

In a further preferred embodiment the catalyst particles are separated from the liquid product at or near the well head, and re-introduced into the well.

Thus, the invention has been described by reference to certain embodiments discussed above. It will be recognized that these embodiments are susceptible to various modifications and alternative forms well known to those of skill in the art

Many modifications in addition to those described above may be made to the structures and techniques described herein without departing from the spirit and scope of the invention. Accordingly, although specific embodiments have been described, these are examples only and are not limiting upon the scope of the invention.

## Claims

1. A process for making a carbon-based energy carrier susceptible to conversion to a liquid fuel under mild conditions, said process comprising the steps of:
a) providing particles of the carbon-based energy carrier having an average particle size dₑ in the range of 5 mm to 100 micrometers;
b) providing catalyst particles having an average particle size dₑ in the range of 1 micrometer to 10 nm.
c) mixing the carbon-based energy particles with the catalyst particles to form a blend;
d) subjecting the blend to a temperature in the range of from 50 to 200 °C in the presence of an oxygen-poor gas to form a sensitized energy carrier material.

2. The process of claim 1 wherein the carbon-based energy carrier is selected from the group consisting of coal, tar sand, shale oil, and biomass.

3. The process of claim 1 or 2 wherein the carbon-based energy carrier is biomass.

4. The process of claim 3 wherein the biomass is of photosynthetic origin.

5. The process of one of the preceding claims wherein the ratio r, defined as dₑ/d_{c} is in the range of 500 to 50,000.

6. The process of claim 5 wherein r is in the range of 1000 to 10,000.

7. The process of any one of the preceding claims wherein the carbon-based energy carrier particles and the catalyst particles are blended in a weight ratio of from 1000:1 1 to 10:1.

8. The process of claim 7 wherein the weight ratio is from 100:1 to 30:1.

9. The process of any one of the preceding claims wherein the oxygen-poor gas comprises steam.

10. The process of claim 9 wherein at least part of the steam is generated as a result of raising the temperature of the carbon-based energy carrier.

11. The process of any one of the preceding claims wherein the catalyst is selected from the group consisting of clays, zeolites, cationic layered materials, anionic clays, LDHs, smectite clays, saponites, sepiolites and mixtures thereof.

12. The process of claim 11 wherein the catalyst is a hydrotalcite.

13. The process of claim any one of the preceding claims, wherein the catalyst particles are prepared by exfoliating a layered inorganic material.

14. The process of any one of the preceding claims, wherein the sensitized energy carrier material is subjected to a conversion to a liquid fuel under mild conditions.

15. The process of claim 14 wherein the mild conditions comprise a temperature in the range of from 150 to 500 °C and a pressure of from 1 to 50 bar.

16. The process of claim 15 wherein the mild conditions comprise a temperature in the range of from 200 to 350 °C and a pressure in the range of from 1 to 20 bar.

17. The process of any one of claims 14 through 16, wherein the mild conditions comprise hydrothermal conversion conditions.

18. The process of any one of claims 14 through 16 wherein the mild conditions comprise mild pyrolysis conditions.
